# EUROPEAN PATENT SPECIFICATION

(11) **EP 0 615 591 B1**
(45) Date of publication and mention of the grant of the patent: **07.10.1998**
(21) Application number: 92916887.0
(22) Date of filing: 17.07.1992
(51) Int. Cl.: F16K 11/087, F16K 51/00

(54) **FLOW RATE AND TEMPERATURE LIMITING MECHANISM FOR A MIXING VALVE**
MENGEN-UND TEMPERATURBEGRENZUNGSVORRICHTUNG FUER EIN MISCHVENTIL
MECANISME DE REGULATION DE TEMPERATURE MAXIMALE ET DE DEBIT MAXIMAL POUR UN ROBINET MITIGEUR

(30) Priority: 29.11.1991 IT TO910925
(43) Date of publication of application: 21.09.1994
(73) Proprietor: MASCO CORPORATION, Taylor, MI 48180 (US)
(72) Inventor: KNAPP, Alfons, D-7950 Biberach/Riss (DE)
(74) Representative: Oppermann, Ewald, Dipl.-Ing.
(86) International application number: US9205977
(87) International publication number: WO9311382

(56) References cited:
- US-A- 1 299 586
- US-A- 3 526 250
- US-A- 3 915 195
- US-A- 4 449 551
- US-A- 4 941 509

## Description

The field of this invention relates to a faucet mixing valve according to the preamble portions of claims 1 and 16, respectively, and more particularly to a volume and temperature limit device for a mixing valve.

Single handle faucets, commonly referred to as mixer valves, that control the flow of both hot and cold water have seen vast consumer acceptance. The faucets are commonly constructed such that a handle or knob is movable in two distinct direction to adjust the mix of hot and cold water and to adjust the volume or flow rate.

The two basic types of mixer valves that have seen widest commercial acceptance are plate valves and ball valves. Ball valves are renowned for reliable and durable one piece valve construction that is easily assembled. Plate valves on the other hand offer a drive mechanism that allows motion of the handle in two distinct directions that has found widest commercial acceptance. This desirable handle motion allows for an orbiting motion of the handle about a fixed axis of the valve body and a rocking, i.e. pivoting motion about a axis that moves with respect to the valve housing as the handle orbits about the fixed axis. The moving axis is perpendicular to the fixed axis of the valve housing. A characteristic of this type of handle motion is that when the handle is pivoted to an off position, the mix ratio of hot and cold water can be remembered by the location of the handle so that when the faucet is turned back on, one has the option of obtaining the same mix of hot and cold water flows through the faucet.

Recently, ball valves have been devised that allow the handle to be operated in the same fashion as the above described plate type mixer valves. The system is disclosed in United States Patent No. 4,449,551 issued to Lorch on May 22, 1984. Another stem is disclosed in PCT application PCT/US91/07816 (WO 92/22765) filed on October 22, 1991 by the present applicant.

Most plate type and ball type mixing valves have a control stem extending out from the valve housing and being connectable to a handle to control the position of the valve. The extent of motion for controlling the maximum amount of flow and the maximum temperature of the water is commonly defined by the shape of the opening or by structures placed under an adjustment ring screwed into the cap member to tighten the valve assembly against leakage. The internal position of the volume and temperature limiters renders them difficult to change. Repair or replacement of the limit structures requires that the main water line be shut off from the valve. Often, the volume and temperature limiters are built into the guide mechanism of the valve itself which therefore requires the elements to be structurally resistant against any torquing forces not in the direction of motion of the handle. These forces are commonly referred to as lateral forces.

According to document US-A-4 449 551 forming the preamble portion of claim 16, a limiting disc has been mounted in the valve housing for limited rotation about an axis of the housing. The disc has a slot through which a control stem extends. The control stem has a rectangular cross-section. The rectangular control stem engages two opposing edges of the slot to prevent relative rotation of the stem with the slot. In this manner, the limited rotation of the disc corresponds to the extent of rotation of the stem about the axis of the valve housing. The length of the slot limits the stems extent of rocking motion about a transverse axis. The need for a rectangular cross-sectioned stem increases the cost as compared with a standard circular cross-sectioned stem. Secondly, the rectangular shape provides larger dimensions of the stem as compared to a cylindrical stem and therefore hinders the reduction of the general dimensions of the faucet mixing valve housing. Thirdly, significant technological difficulties exist to have the rectangular control stem made integral with the ball valve. The rectangular control stem must be precisely oriented onto the ball valve element. A small angular discrepancy provides for a significant change in temperature control.

Further, document US-A-3 526 250 forming the preamble portion of claim 1 discloses a faucet mixing valve in which an insert is press fitted into the handle connected to the control stem. The insert extends into an upper slot to limit only the rotation of the handle, whilst the rocking of the control stem is limited by the shape of a further slot that lies below the insert and the upper slot and abuts directly against the control stem.

Troubles may arise with an element press fitted into the handle. During rocking, if the insert abuts the end edge of the slot, and force is still exerted onto the handle, the rocking force exerts a torque on the handle which translates into a pulling force that tends to pull the handle out away from the insert. Therefore, particular means need to be provided to prevent separation of the handle from the insert.

What is needed is a volume and temperature limiting device that can be applied to the exterior of the valve housing. Furthermore what is needed is a limiter device that is independent from the guide mechanism of the mixing valve faucet to provide for a system which can easily allow replacement of limiting elements for changing the volume and temperature field of the mixing valve without disassembly of the valve housing. It is further desired to have a limiter device that can be incorporated onto a cylindrical control stem of a faucet mixing valve.

Accordingly, the object of the present invention is to further develop the state of the art according to documents US-A-3 526 250 and US-A-4 449 551, respectively, to the effect that the faucet mixing valve comprises a simple and reliable flow rate and temperature limiting mechanism.

This object is solved by the features indicated in the characterizing portions of claims 1 and 16, respectively. Advantageously developed embodiments of the invention are subject-matter of the dependent claims 2 to 15 and 17 to 19.

According to a first aspect of the invention, a limiter element is removably and fixedly attached to the control stem and passes into the slot. The limiter element has peripheral abutment surfaces for engagement to the edges defining the slot for limiting the extent of rotational motion of the control stem about its longitudinal axis within the slot and for limiting the extent of rocking motion of the control stem about an axis orthogonal to both the longitudinal axis of the control stem and a longitudinal axis of the slot. The limiter element is integrally and simultaneously formed with a handle as a one-piece member that is mounted onto the control stem.

According to a second aspect of the invention, a limiting member is affixedly and removably mounted at a fixed position to an exterior portion of the valve housing in proximity to the cap, and has a contoured aperture therethrough with a peripheral edge defining the aperture. The aperture is sized to receive the control stem and allow total lateral motion of the control stem in at least two transverse directions within the aperture, wherein the peripheral edge defines a limit stop for both the flow and maximum temperature mix of the water to the outlet port. The limiting member being removable from the exterior portion of the valve housing without disturbing the cap for retaining the ball valve in an operable condition in the valve receiving cavity against water pressure exerted in the inlet ports and limiting the ball valve and rotation about the axis of the valve housing and the axis of the ball valve that is perpendicular thereto.

Reference now is made to the accompanying drawings in which:
Figure 1 is a side elevational and segmented view of a faucet mixer valve according to one embodiment of the invention;
Figure 2 is a cross-sectional view taken along lines 2-2 shown in figure 1;
Figure 3 is a cross-sectional view taken along lines 3-3 shown in figure 1; and
Figure 4 is a cross-sectional view taken along lines 4-4 shown in figure 2;
Figure 5 is a side elevational and segmented view of a second embodiment according to the invention;
Figure 6 is a top plan view of the limiter element illustration in Figure 5; and
Figure 7 is a side elevational view of a third embodiment according to the invention.

Referring now to figures, a mixing valve 10 has a conventional valve housing 12 that is formed from a base member 14 and a cover 16. A mixing valve element 20 with a control stem 22 extends through an opening 24 in the cover 16. A limiting mechanism 26 is positioned to the exterior of the housing 12 to limit the flow rate and temperature mix of the water flowing through the valve 10.

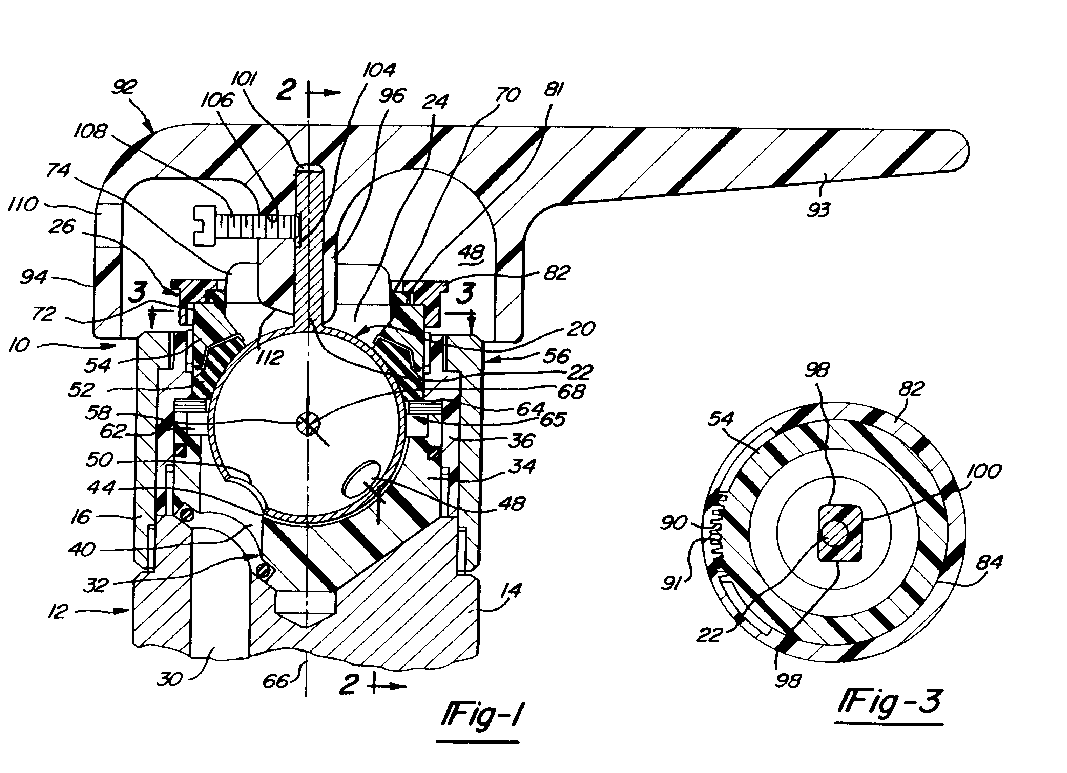

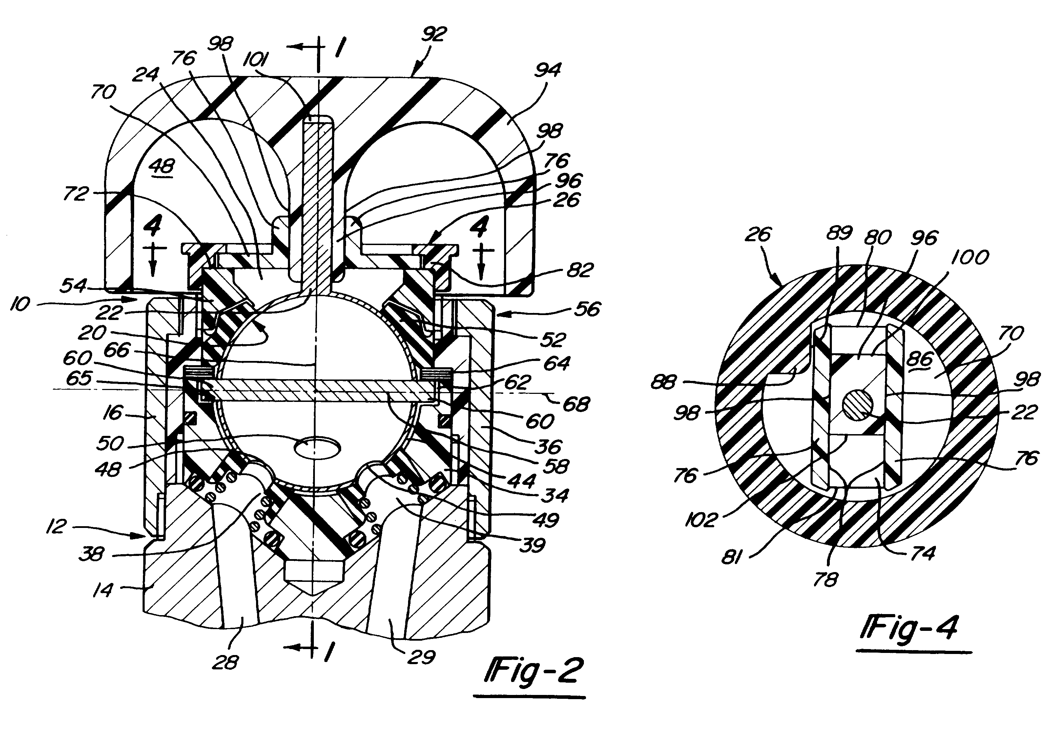

More particularly, as shown in figures 1 and 2, the base member 14 has two inlet ports 28 and 29 for hot and cold water and an outlet port 30 for the passage of mixed water. The illustrated mixing valve 10 is a cartridge type having a cartridge housing 32 fitted within the housing 12. The cartridge housing 32 includes a lower body member 34 and an upper body member 36 that are fitted together in a known fashion. The lower body member 34 has two inlet passages 38 and 39 housing sealing assemblies and being aligned with inlet ports 28 and 29. An outlet passage 40 is aligned with outlet port 30.

The cartridge housing 32 defines a cavity 44 shaped to receive the valve element 20 . The illustrated valve element 20 is commonly referred to as a ball valve. The ball valve 20 is seated in cavity 44 that is substantially spherical. The ball valve 20 has ports 48, 49 and 50 that functionally cooperate with passages 38, 39 and 40 to control flow rate and temperature of water passing to outlet port 30. A sealing gasket 52 is sealingly interposed between an upper part of the ball valve 20 and cartridge upper body member 36 to prevent leakage of water from the mixing valve 10 to the exterior about the housing 12. An adjustment ring 54 is threadably engaged to the upper body member 36 of the cartridge housing 32 and biases the gasket 52 against the ball valve 20. The cover 16, upper body member 36, and adjustment ring 54 can collectively be referred to as a cap assembly 56 for the housing 12. It is also appreciated that the ball valve 20 may be mounted directly in housing 12 without a cartridge housing 32. Cap assembly 56 may be a single integrally formed member.

The ball valve 20 has a pin 58 extending therethrough with distal ends 60 extending into a slot 62 defined below a guide ring 64 which form a guide mechanism 65. The details of the function of the guide mechanism 65 with pin 58 is explained in PCT application PCT/US91/07816 (WO 92/22765) filed on October 22, 1991 by the present applicant. Generally, the guide mechanism 65 allows orbiting motion of the control stem about a fixed vertical axis 66 and rocking motion about a horizontal axis 68 through the pin 58. The axis 68 is movable with respect to the housing 12 but fixed with respect to the ball valve 20. The axis 66 extends through opening 24 and cavity 44 in housing 12. Motion in a direction other that these two prescribed directions is prohibited by the construction of the internal members of the mixing valve 10. The pin 58, guide ring 64, and cartridge lower body member 34 are constructed to be strong enough to resist lateral torquing forces in directions other than the prescribed directions.

The limiting mechanism 26 includes a limit plate member or disc 70 that is rotatably mounted on top of the outer end 72 of adjustment ring 54 about vertical axis 66. As shown in figures 1 and 4, the disc 70 has an elongated slot 74 with two upwardly extending flanges 76 defining the longer edges 78 of slot 74 and two opposite end edges 80 and 81. The disc 70 is retained on adjustment ring 54 by a positioning ring 82 that is engaged to an outer periphery 84 of outer end 72 of adjustment ring 54. As best shown in figure 4, the positioning ring 82 has a center aperture 86 that allows the limit ring to rotate a limited amount. The ring 82 has a radially inwardly extending projection 88 that has an edge 89 which can abut at least one flange 76 to provide a stop toward the full hot position to define the maximum temperature mix position.

Furthermore, the position of projection 88 can be rotatably adjusted by repositioning ring 82 onto the outer periphery 84. As best shown in figure 3, the outer periphery 84 has an externally splined section 91 that engages an internally splined section 90 of ring 82. The adjustment of the ring 82 varies the amount of rotation of the disc 70 and ball valve 20 between a full cold position defined by guide mechanism 65 and a full hot position.

An operating handle 92 is affixed to control stem 22 to operate the ball valve 20. The handle 92 has a lever section 93, cap section 94 and a leg section 96 that connects to stem 22. The leg section 96 has a substantially rectangular outer cross-section sized to fit within slot 74 with two sides 98 slidably abutting edges 78. A side 100 is engageable to end edge 80. The leg section 96 has a circular hole 101 asymmetrically placed between sides 100 and 102 and sized to receive stem 22 that is generally cylindrical in shape.

The stem 22 may have a flat 104 machined therein that is aligned with a threaded aperture 106 in leg section 96 that receives set screw 108. Cap section 94 may have an access hole 110 to facilitate operation of set screw 108. Alternately to the flat 104, the stem 22 may have a splined upper section which engages an internally splined section in hole 101. When a splined connection is used, the rotational orientation of the flat 104 during machining is eliminated. Correct orientation of the handle 92 is accomplished during assembly onto stem 22.

It can be seen that the spacing of side 100 from stem 22 controls the amount of rocking motion that can exist from the off position that is defined by the internal guide mechanism 65 to an open position. The abutment of side 100 against end edge 80 defines the maximum flow rate position. The maximum flow rate may also be adjusted by replacement of the handle with another that has its side 100 spaced a different amount from the stem 22.

The lower surface 112 of leg section 96 is inclined to facilitate insertion of the leg section 96 into the slot 74. This inclined surface 112 is particularly useful where the leg section 96 and slot 74 are partially or fully concealed when the leg section 96 is positioned on stem 22. This concealment occurs when the cap section 94 is sized and shaped to cover and conceal the top end of cap assembly 56 as illustrated in figures 1 and 2. When cap assembly 56 has its top end concealed, it should be understood that the opening 24 through the cap assembly 56, the plate member 70 with its slot 74, and positioning ring 82 is also concealed under the cap section 94. The control stem 22 and the leg section 96 are also concealed by the cap section 94.

The leg section 96 has been described as being integral with respect to the handle 90. The leg section 96 may be a separate member attached to the handle 90 or attached in a separate fashion to the control stem 22 independent of handle 90. The leg section 96 demands a cross-sectional shape that limits rotation within slot 74 but does not place any other constraints on the configurations of the handle 90.

The use of the limiting mechanism 26 allows ease of repair and replacement. Only the handle needs to be removed from the control stem in order to repair or replace the limiting mechanism 26. Because the cap assembly 56 is not removed and gasket 52 remains undisturbed, the limiting mechanism may be repaired or replaced without turning off the water supply to the mixing valve 10. The ring 82 and disc 70 may be constructed to only resist torque exerted by the leg section 96 in the two directions of motion of the leg section 96 where leg section 96 abuts edge 80 of side flange 76. Torque forces exerted in other directions are resisted by guide mechanism 65 within mixing valve 10.

Adjustment of the maximum temperature mix may not be necessary or desired in certain applications. In this situation, the positioning ring 82 may be integrally formed with the adjustment ring 54 thereby eliminating a part in the mixing valve assembly 10.

The ring 82 and disc 70 may be constructed strong enough in certain applications that it may function as a substitute guide mechanism. The guide mechanism 65 may be dispensed with because the limiting mechanism 26 also restrains the motion of the stem 22 in the two prescribed directions.

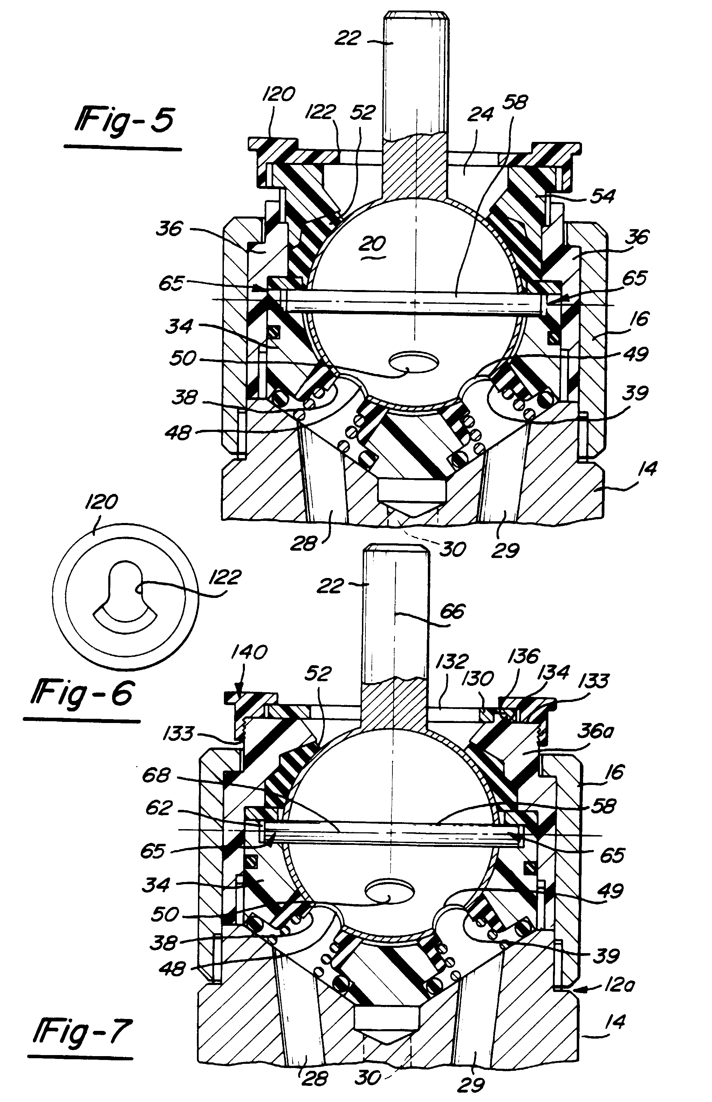

A second embodiment is disclosed in figures 5 and 6. In this embodiment, a single piece limiter element 120 is splined fitted onto the top exterior end of adjustment ring 54. The limiter element 120 has a contoured aperture 122 that defines the limits in temperature and volume for the motion of stem 22. The stem 22 in this embodiment does not need a leg section 96 from handle 92 to correctly operate. This limiter element 120 must be used with guide mechanism 65 or an equivalent.

Adjustment of the maximum temperature mix and/ or the volume maximum is accomplished by replacing the limiter element 120 with another having an aperture 122 with a different contour. The replacement of the element 120 is easily obtained by removal of the handle. The interior or the seals of the mixing valve 10 are not disturbed. In this fashion the temperature field and volume field can be changed without the need to shut off the supply of the water to the mixing valve.

A third embodiment is shown in figure 7 which discloses the limiter element 130 keyed directly onto the upper end 133 of the upper cartridge body member 36a. The limiter element 130 has a notch 134 which receives a protrusion 136 extending from upper cartridge body member 36a. The limiter element 130 is rotationally fixed with respect to-the housing 12a. The limiter element 130 has a contoured aperture 132 similar to aperture 122. A positioning ring 140 is threadably fastened to the upper end 133 of the upper body member 36a to retain the element 130 securely in position. The stem 22 in this embodiment does not need a leg section 96 from handle 92 to correctly operate. This limiter element 130 must be used with guide mechanism 65 or an equivalent.

The fields of temperature and volume control may be adjusted by merely removing the handle, unscrewing the ring 140 and replacing the limiter element 130 with one having an aperture 132 with a different contour. The interior or the seals of the mixing valve 10 are not disturbed. In this fashion the temperature field and volume field can be changed without the need to shut off the supply of the water to the mixing valve.

It should be understood that while a ball valve 20 is illustrated, the invention can also be advantageously in mixing valves that have a valve element of a different construction and configuration.

Variations and modifications are possible without departing from the scope of the present invention as defined by the appended claims.

## Claims

1. A faucet mixing valve (10), comprising
a housing (12) with a valve chamber (44), a first and second supply inlet (38, 39) and an outlet (40) in communication with said valve chamber (44),
a mixing valve element (20) operably mounted in said valve chamber (44) and a control stem (22) extending from said mixing valve element (20) through an opening (24) in said housing (12),
a limiting plate member (70) having an elongated slot (74) therethrough with a pair of opposing long side edges (78) and a pair of end edges (80, 81) defining said slot (74), said slot (74) being sized to receive said control stem (22),
positioning means (82) for positioning said limiting plate member (70) with respect to said housing (12) with said control stem (22) extending therethrough,
**characterized by** a limiter element (96) removably and fixedly attached to said control stem (22) and passing into said slot (74),
said limiter element (96) having peripheral abutment surfaces (98, 100, 102) for engagement to said edges (78, 80, 81) defining said slot (74) for limiting the extent of rotational motion of said control stem (22) about its longitudinal axis within said slot (74) and for limiting the extent of rocking motion of said control stem (22) about an axis orthogonal to both said longitudinal axis of said control stem (22) and a longitudinal axis of said slot (74), and
said limiter element (96) being integrally and simultaneously formed with a handle (92) as a one-piece member that is mounted onto said control stem (22).

2. A faucet mixing valve (10) according to claim 1, wherein said limiter element (96) has an outer periphery which is substantially rectangular in cross-section along a plane that is substantially transverse to the longitudinal axis of said control stem (22).

3. A faucet mixing valve (10) according to claim 2, wherein said outer periphery of said limiter element (96) is sized to slideably abut said side edges (78) of said slot (74) to substantially prevent any substantial rotation of said control stem (22) relative to said slot (74) about the longitudinal axis of said control stem (22).

4. A faucet mixing valve (10) according to one of the preceding claims, wherein said limiter element (96) has a control stem receiving hole (101) being asymmetrically positioned in said limiter element (96).

5. A faucet mixing valve (10) according to one of the preceding claims, wherein said limiter element (96) has an inclined lower surface (112) that facilitates its insertion into said slot (74) of said limiting plate member (70).

6. A faucet mixing valve (10) according to claim 5, wherein said control stem (22) has a substantially circular cross-section.

7. A faucet mixing valve (10) according to one of the preceding claims, wherein
said limiting plate member (70) has a limited degree of rotation about a fixed axis (66) with respect to said housing (12) that extends through said valve chamber (44) for allowing simultaneous rotation of said control stem (22) and said limiting plate member (70) about said fixed axis (66), and
said positioning means includes a positioning ring member (82).

8. A faucet mixing valve (10) according to claim 7, wherein said limiting plate member (70) and said positioning ring member (82) have complementary abutting edge surfaces (76, 89) that limit the rotation of said limiting plate member (70).

9. A faucet mixing valve (10) according to claim 7 or 8, wherein said side edges (78) have two parallel flanges (76) extending transverse to the general plane of said limiting plate member (70) with at least one flange engageable to a projection (88) extending from said positioning ring member (82) to limit the rotation of said limiting plate member (70).

10. A faucet mixing valve (10) according to claim 9, wherein said projection (88) extends radially inwardly from said positioning ring member (82).

11. A faucet mixing valve (10) according to one of the claim 7 to 10, wherein said positioning ring member (82) is adjustably mounted about said axis (66) of said housing (12) for varying the amount of rotation of said limiting plate member (70).

12. A faucet mixing valve (10) according to one of the preceding claims, wherein
said limiting plate member (70) is mounted to an exterior portion of said housing (12) in proximity to a cap (56), and
said mixing valve element (20) is a ball valve element.

13. A faucet mixing valve (10) according to claim 12, wherein said cap (56) includes an adjustment ring (54) mounted at said opening (24), said limiting plate member (70) and said positioning means (82) being engaged with an outer end (72) of said adjustment ring (54).

14. A faucet mixing valve (10) according to claim 13, wherein said positioning ring member (82) is attached to an outer periphery of said adjustment ring (54).

15. A faucet mixing valve (10) according to one of the preceding claims, wherein said handle (92) includes a cap section (94) sized to cover and conceal said opening (24) in said housing (12), said limiting plate member (70), said positioning means (82), said limiter element (96), and said control stem (22).

16. A mixer valve (10) for a faucet, comprising
a ball valve (20) pivotably mounted in a valve receiving cavity (44) of a valve housing (14) which has a plurality of inlet ports (38, 39) and an outlet port (40) in fluid communication with said valve receiving cavity (44),
said ball valve (20) having
a plurality of openings (48, 49, 50) in an outer at least partially spherical valve surface, said openings (48, 49, 50) cooperating with said ports (38, 39, 40) to control water flow through said ports (38, 39, 40),
a control opening (24) therethrough with an axis (66) of said valve housing (14) passing through said control opening (24), and
a control stem (22) extending therefrom and through said control opening (24) with said ball valve (20) being mounted for rotation about said axis (66) of said valve housing (14) and about an axis (68) of said ball valve (20) that is perpendicular to said axis (66) of said valve housing (14) for control of temperature and flow of water to said outlet port (40) from said inlet ports (38, 39),
said valve housing (14) including a cap (16) for retaining said ball valve (20) in said valve receiving cavity (44) with said control opening (24) extending through said cap (16),
**characterized by** a limiting member (120, 130) affixedly and removably mounted at a fixed position to an exterior portion of said valve housing (14) in proximity to said cap (16), and having a contoured aperture (122) therethrough with a peripheral edge defining said aperture (122),
said aperture (122) being sized to receive said control stem (22) and allow total lateral motion of said control stem (22) in at least two transverse directions within said aperture (122),
said peripheral edge defining a limit stop for both said flow and maximum temperature mix of said water to said outlet port (40), and
said limiting member (120, 130) being removable from said exterior portion of said valve housing (14) without disturbing said cap (16) for retaining said ball valve (20) in an operable condition in said valve receiving cavity (44) against water pressure exerted in said inlet ports (38, 39) and limiting said ball valve (20) and rotation about said axis (66) of said valve housing (14) and said axis (68) of said ball valve (20) that is perpendicular thereto.

17. A mixer valve (10) according to claim 16, wherein said limiting member (120, 130) is one piece and splined onto an exterior surface of said mixer valve (10).

18. A mixer valve (10) according to claim 16, wherein said limiting member (120) is one piece and splined onto an exterior surface of an adjustment ring (54) that is operably connected to a seal (52) that abuts said ball valve (20).

19. A mixer valve (10) according to claim 16, wherein
said limiting member (130) is keyed onto an exterior surface of said valve housing (14) to prevent rotation thereof, and further comprising
a ring member (140) affixed onto said exterior surface of said valve housing (14) for retaining said limiting member (130) in position on said valve housing (14).

## Patentansprüche

1. Hahnmischventil (10), umfassend
ein Gehäuse (12) mit einer Ventilkammer (44), einem ersten und einem zweiten Zufuhreinlaß (38, 39) und einem Auslaß (40), die mit der Ventilkammer (44) in Verbindung stehen,
ein Mischventilelement (20), das betreibbar in der Ventilkammer (44) montiert ist, und einen Steuerschaft (22), der sich von dem Mischventilelement (20) weg durch eine Öffnung (24) in dem Gehäuse (12) erstreckt,
ein Begrenzungsplattenteil (70), das durch sich hindurch einen langgestreckten Schlitz (74) mit einem Paar einander gegenüberliegender langer Seitenkanten (78) und einem Paar Endkanten (80, 81) aufweist, die den Schlitz (74) begrenzen, wobei der Schlitz (74) dimensioniert ist, um den Steuerschaft (22) aufzunehmen, und
eine Positioniereinrichtung (82) zum Positionieren des Begrenzungsplattenteils (70) bezüglich des Gehäuses (12), wobei sich der Steuerschaft (22) dort hindurch erstreckt,
**gekennzeichnet durch** ein Begrenzungselement (96), welches lösbar und starr an dem Steuerschaft (22) angebracht ist und in den Schlitz (74) hinein verläuft,
wobei das Begrenzungselement (96) umfangsseitig Anlageflächen (98, 100, 102) zum Eingreifen mit den Kanten (78, 80, 81) hat, die den Schlitz (74) begrenzen, um das Ausmaß einer Drehbewegung des Steuerschafts (22) um seine Längsachse in dem Schlitz (74) zu begrenzen und um das Ausmaß einer Schwenkbewegung des Steuerschafts (22) um eine Achse zu begrenzen, die senkrecht zu sowohl der Längsachse des Steuerschafts (22) als auch einer Längsachse des Schlitzes (74) steht, und
wobei das Begrenzungselement (96) vollständig und gleichzeitig mit einem Handgriff (92) als ein einstückiges Teil ausgebildet ist, das an dem Steuerschaft (22) angebracht ist.

2. Hahnmischventil (10) nach Anspruch 1, wobei das Begrenzungselement (96) einen Außenumfang hat, der im Querschnitt entlang einer Ebene, die im wesentlichen quer zu der Längsachse des Steuerschafts (22) verläuft, im wesentlichen rechteckig ist.

3. Hahnmischventil (10) nach Anspruch 2, wobei der Außenumfang des Begrenzungselements (96) dimensioniert ist, um gleitend an den Seitenkanten (78) des Schlitzes (74) anzuliegen, um jegliche wesentliche Drehung des Steuerschafts (22) relativ zu dem Schlitz (74) um die Längsachse des Steuerschafts (22) im wesentlichen zu verhindern.

4. Hahnmischventil (10) nach einem der vorhergehenden Ansprüche, wobei das Begrenzungselement (96) ein Steuerschaftaufnahmeloch (101) hat, das asymmetrisch in dem Begrenzungselement (96) angeordnet ist.

5. Hahnmischventil (10) nach einem der vorhergehenden Ansprüche, wobei das Begrenzungselement (96) eine geneigte untere Fläche (112) hat, die sein Einsetzen in den Schlitz (74) des Begrenzungsplattenteils (70) erleichtert.

6. Hahnmischventil (10) nach Anspruch 5, wobei der Steuerschaft (22) einen im wesentlichen kreisförmigen Querschnitt aufweist.

7. Hahnmischventil (10) nach einem der vorhergehenden Ansprüche, wobei
das Begrenzungsplattenteil (70) um eine bezüglich des Gehäuses (12) feststehende Achse (66), die sich durch die Ventilkammer (44) hindurch erstreckt, begrenzt drehbar ist, um eine gleichzeitige Drehung des Steuerschafts (22) und des Begrenzungsplattenteils (70) um die feststehende Achse (66) zu gestatten, und
wobei die Positioniereinrichtung ein Positionierringteil (82) aufweist.

8. Hahnmischventil (10) nach Anspruch 7, wobei das Begrenzungsplattenteil (70) und das Positionierringteil (82) komplementäre anliegende Kantenflächen (76, 89) haben, die die Drehung des Begrenzungsplattenteils (70) begrenzen.

9. Hahnmischventil (10) nach Anspruch 7 oder 8, wobei die Seitenkanten (78) zwei parallele Stege (76) aufweisen, die sich quer zu der Hauptebene des Begrenzungsplattenteils (70) erstrecken, wobei mindestens ein Steg mit einem Vorsprung (88) in Eingriff bringbar ist, der sich ausgehend von dem Positionierringteil (82) erstreckt, um die Drehung des Begrenzungsplattenteils (70) zu begrenzen.

10. Hahnmischventil (10) nach Anspruch 9, wobei der Vorsprung (88) sich ausgehend von dem Positionierringteil (82) nach radial innen erstreckt.

11. Hahnmischventil (10) nach einem der Ansprüche 7 bis 10, wobei das Positionierringteil (82) einstellbar um die Achse (66) des Gehäuses (12) montiert ist, um das Ausmaß der Drehung des Begrenzungsplattenteils (70) abzuändern.

12. Hahnmischventil (10) nach einem der vorhergehenden Ansprüche, wobei
das Begrenzungsplattenteil (70) an einem Außenabschnitt des Gehäuses (12) in der Nähe einer Kappe (56) montiert ist, und
wobei das Mischventilelement (20) ein Kugelventilelement ist.

13. Hahnmischventil (10) nach Anspruch 12, wobei die Kappe (56) einen an der Öffnung (24) montierten Einstellring (54) aufweist, wobei das Begrenzungsplattenteil (70) und die Positioniereinrichtung (82) mit einem äußeren Ende (72) des Einstellrings (54) in Eingriff stehen.

14. Hahnmischventil (10) nach Anspruch 13, wobei das Positionierringteil (82) an dem Außenumfang des Einstellrings (54) befestigt ist.

15. Hahnmischventil (10) nach einem der vorhergehenden Ansprüche, wobei der Handgriff (92) einen Kappenabschnitt (94) aufweist, der dimensioniert ist, um die Öffnung (24) in dem Gehäuse (12), das Begrenzungsplattenteil (70), die Positioniereinrichtung (82), das Begrenzungselement (96) und den Steuerschaft (22) abzudecken und zu verbergen.

16. Mischventil (10) für einen Hahn, mit
einem Kugelventil (20), das verschwenkbar in einer Ventilaufnahmekammer (44) eines Ventilgehäuses (14) montiert ist, welches eine Mehrzahl von Einlaßdurchgängen (38, 39) und einen Auslaßdurchgang (40) hat, die mit der Ventilaufnahmekammer (44) in Flüssigkeitsverbindung stehen,
wobei das Kugelventil (20)
eine Mehrzahl von Öffnungen (48, 49, 50) in einer äußeren, zumindest teilweise kugelförmigen Ventilfläche hat, wobei die Öffnungen (48, 49, 50) mit den Durchgängen (38, 39, 40) zusammenwirken, um den Wasserdurchfluß durch die Durchgänge (38, 39, 40) zu steuern,
eine Steueröffnung (24) dort hindurch aufweist, wobei eine Achse (66) des Ventilgehäuses (14) durch die Steueröffnung hindurch verläuft (24), und
einen sich davon weg und durch die Steueröffnung (24) hindurch erstreckenden Steuerschaft (22) hat, wobei das Kugelventil (20) derart montiert ist, daß es um die Achse (66) des Ventilgehäuses (14) und um eine Achse (68) des Kugelventils (20) drehbar ist, die senkrecht zu der Achse (66) des Ventilgehäuses (14) steht, um die Temperatur und den Durchfluß des Wassers von den Einlaßdurchgängen (38, 39) zu dem Auslaßdurchgang (40) zu steuern,
wobei das Ventilgehäuse (14) eine Kappe (16) aufweist, um das Kugelventil (20) in der Ventilaufnahmekammer (44) zu halten, wobei sich die Steueröffnung (24) durch die Kappe (16) hindurch erstreckt,
**gekennzeichnet durch** ein Begrenzungsteil (120, 130), das anhängend und lösbar an einer festen Position an einem Außenabschnitt des Ventilgehäuses (14) in der Nähe der Kappe (16) montiert ist und durch sich hindurch eine konturierte Öffnung (122) mit einer Umfangskante hat, die die Öffnung (122) begrenzt,
wobei die Öffnung (122) dimensioniert ist, um den Steuerschaft (22) aufzunehmen und eine gänzliche Querbewegung des Steuerschafts (22) in mindestens zwei Querrichtungen in der Öffnung (122) zu gestatten,
wobei die Umfangskante einen Begrenzungsanschlag für sowohl den Durchfluß als auch die Mischung maximaler Temperatur des Wassers zu dem Auslaßdurchgang (40) ausbildet, und
wobei das Begrenzungsteil (120, 130) von dem Außenabschnitt des Ventilgehäuses (14) lösbar ist ohne die Kappe (16) zu stören, um das Kugelventil (20) in einem betreibbaren Zustand in der Ventilaufnahmekammer (44) gegen den in den Einlaßdurchgängen (38, 39) anstehenden Wasserdruck zu halten und um das Kugelventil (20) und die Drehung um die Achse (66) des Ventilgehäuses (14) und die Achse (68) des Kugelventils (20), die senkrecht dazu steht, zu begrenzen.

17. Mischventil (10) nach Anspruch 16, wobei das Begrenzungsteil (120, 130) einstückig ist und auf eine Außenfläche des Mischventils (10) aufgeschoben ist.

18. Mischventil (10) nach Anspruch 16, wobei das Begrenzungsteil (120) einstückig ist und auf eine Außenfläche eines Einstellrings (54) aufgeschoben ist, der mit einer Dichtung (52) wirkverbunden ist, die an dem Kugelventil (20) anliegt.

19. Mischventil (10) nach Anspruch 16, wobei
das Begrenzungsteil (130) auf einer Außenfläche des Ventilgehäuses (14) festgekeilt ist, um dessen Drehung zu verhindern, und das weiterhin
ein Ringteil (140) aufweist, welches auf der Außenfläche des Ventilgehäuses (14) befestigt ist, um das Begrenzungsteil (130) in seiner Lage an dem Ventilgehäuse (14) zu halten.

## Revendications

1. Robinet mélangeur (10), comprenant :
un boîtier (12) ayant une chambre (44) de robinet, une première et une seconde entrée (38, 39) et une sortie (40) communiquant avec la chambre (44),
un élément obturateur (20) du robinet de mélange monté en position de service dans la chambre (44) et une tige (22) de commande dépassant de l'élément obturateur (20) et passant dans une ouverture (24) du boîtier (12),
un organe à plaque de limitation (70) ayant une fente allongée (74) traversante présentant deux bords opposés (78) suivant des grands côtés et deux bords (80, 81) d'extrémité qui délimitent la fente (74), la fente (74) ayant une dimension telle qu'elle peut loger la tige de commande (22), et un dispositif (82) de positionnement de l'organe à plaque de limitation (70) par rapport au boîtier (12) avec la tige de commande (22) passant dans celui-ci,
caractérisé par un élément limiteur (96) fixé à la tige de commande (22) de façon amovible et sans jeu et passant dans ladite fente (74),
l'élément limiteur (96) ayant des surfaces périphériques de butée (98, 100, 102) destinées à coopérer avec les bords (78, 80, 81) délimitant la fente (74) de limitation de l'amplitude du mouvement de rotation de la tige de commande (22) autour de son axe longitudinal dans la fente (74) et à limiter l'amplitude du mouvement de basculement de la tige de commande (22) autour d'un axe perpendiculaire à la fois à l'axe longitudinal de la tige de commande (22) et à l'axe longitudinal de la fente (74), et
l'élément limiteur (96) étant formé simultanément à une poignée (92) dont il est solidaire, sous forme d'un organe en une seule pièce qui est monté sur la tige de commande (22).

2. Robinet mélangeur (10) selon la revendication 1, dans lequel l'élément limiteur (96) a une périphérie externe de section pratiquement rectangulaire dans un plan qui est pratiquement transversal à l'axe longitudinal de la tige de commande (22).

3. Robinet mélangeur (10) selon la revendication 2, dans lequel la périphérie externe de l'élément limiteur (96) a une dimension telle qu'il peut être en butée de façon coulissante contre les bords latéraux (78) de la fente (74) pour empêcher pratiquement toute rotation importante de la tige de commande (22) par rapport à la fente (74) autour de l'axe longitudinal de la tige de commande (22).

4. Robinet mélangeur (10) selon l'une des revendications précédentes, dans lequel l'élément limiteur (96) a un trou (101) de logement de la tige de commande qui est placé asymétiquement dans l'élément limiteur (96).

5. Robinet mélangeur (10) selon l'une des revendications précédentes, dans lequel l'élément limiteur (96) a une surface inférieure inclinée (112) qui facilite son insertion dans la fente (74) de l'organe à plaque de limitation (70).

6. Robinet mélangeur (10) selon la revendication 5, dans lequel la tige de commande (22) a une section pratiquement circulaire.

7. Robinet mélangeur (10) selon l'une quelconque des revendications précédentes dans lequel :
l'organe à plaque de limitation (70) a un degré limité de rotation autour d'un axe fixe (66) par rapport au boîtier (12) passant dans la chambre (44) pour permettre une rotation simultanée de la tige de commande (22) et de l'organe à plaque de limitation (70) autour de l'axe fixe (66), et
le dispositif de positionnement comporte un organe annulaire de positionnement (82).

8. Robinet mélangeur (10) selon la revendication 7, dans lequel l'organe à plaque de limitation (70) et l'organe annulaire de positionnement (82) ont des surfaces de bord complémentaires de butée (76, 89) qui limitent la rotation de l'organe à plaque de limitation (70).

9. Robinet mélangeur (10) selon la revendication 7 ou 8, dans lequel les bords latéraux (78) ont deux joues parallèles (76) placées transversalement au plan général de l'organe à plaque de limitation (70), une joue au moins pouvant coopérer avec une saillie (88) dépassant de l'organe annulaire de positionnement (82) pour limiter la rotation de l'organe à plaque de limitation (70).

10. Robinet mélangeur (10) selon la revendication 9, dans lequel la saillie (88) s'étend radialement vers l'intérieur depuis l'organe annulaire de positionnement (82).

11. Robinet mélangeur (10) selon l'une des revendications 7 à 10, dans lequel l'organe annulaire de positionnement (82) est monté de façon réglable autour de l'axe (66) du boîtier (12) afin qu'il fasse varier l'amplitude de rotation de l'organe à plaque de limitation (70).

12. Robinet mélangeur (10) selon l'une des revendications précédentes, dans lequel :
l'organe à plaque de limitation (70) est monté sur une partie externe du boîtier (12) à proximité d'un capuchon (56), et
l'élément obturateur (20) est un élément obturateur sphérique.

13. Robinet mélangeur (10) selon la revendication 12, dans lequel le capuchon (56) comporte un anneau d'ajustement (54) monté au niveau de l'ouverture (54), l'organe à plaque de limitation (70) et le dispositif de positionnement (82) coopérant avec une extrémité externe (72) de l'anneau d'ajustement (54).

14. Robinet mélangeur (10) selon la revendication 13, dans lequel l'organe annulaire de positionnement (82) est fixé à la périphérie externe de l'anneau d'ajustement (54).

15. Robinet mélangeur (10) selon l'une des revendications précédentes, dans lequel la poignée (92) comporte un tronçon de capuchon (94) ayant une dimension telle qu'il recouvre et cache l'ouverture (24) formée dans le boîtier (12), l'organe à plaque de limitation (70), le dispositif de positionnement (82), l'élément limiteur (96) et la tige de commande (22).

16. Robinet mélangeur (10), comprenant
un obturateur sphérique (20) monté afin qu'il pivote dans une cavité (44) de logement d'obturateur d'un boîtier (14) de robinet qui a plusieurs orifices d'entrée (38, 39) et un orifice de sortie (40) qui communiquent avec la cavité (44) de logement de l'obturateur,
l'obturateur sphérique (20) ayant :
plusieurs ouvertures (48, 49, 50) formées sur une surface externe au moins partiellement sphérique d'obturateur, les ouvertures (48, 49, 50) coopérant avec les orifices (38, 39, 40) pour le réglage de la circulation de l'eau par les orifices (38, 39, 40),
une ouverture de commande (24) qui le traverse avec un axe (66) du boîtier (14) du robinet qui passe par l'ouverture de commande (24), et
une tige de commande (22) qui dépasse de l'obturateur et passe dans l'ouverture de commande (24) avec l'obturateur (20) monté tournant autour de l'axe (66) du boîtier (14) et autour d'un axe (68) de l'obturateur (20) qui est perpendiculaire à l'axe (66) du boîtier (14) afin qu'il règle la température et le débit d'eau vers l'orifice de sortie (40) depuis les orifices d'entrée (38, 39),
le boîtier (14) du robinet comprenant un capuchon (16) destiné à retenir l'obturateur (20) dans la cavité (44) de logement d'obturateur avec l'ouverture de commande (24) qui traverse le capuchon (16),
caractérisé par un organe de limitation (120, 130) monté en position fixe et de façon amovible sur une partie extérieure du boîtier (14) du robinet à proximité du capuchon (16), et ayant une ouverture profilée (122) qui le traverse et qui a un bord périphérique délimitant l'ouverture (122),
l'ouverture (122) ayant une dimension telle qu'elle peut loger la tige de commande (22) et qu'elle permet un mouvement latéral de la tige de commande (22) dans au moins deux directions transversales à l'intérieur de l'ouverture (122),
le bord périphérique délimitant une butée de limitation à la fois pour le débit et la température maximale de mélange de l'eau vers l'orifice de sortie (40), et
l'organe de limitation (120, 130) pouvant être retiré de la partie extérieure du boîtier (14) du robinet sans empêcher le capuchon (16) de retenir l'obturateur (20) de forme sphérique en position de travail dans la cavité (44) de logement d'obturateur sous l'action de la pression de l'eau exercée dans les orifices d'entrée (38, 39) et limitant la rotation de l'obturateur (20) autour de l'axe (66) du boîtier (14) du robinet et de l'axe (68) de l'obturateur (20) qui lui est perpendiculaire.

17. Robinet mélangeur (10) selon la revendication 16, dans lequel l'organe de limitation (120, 130) est en une seule pièce et est monté par des cannelures sur une surface extérieure du robinet mélangeur (10).

18. Robinet mélangeur (10) selon la revendication 16, dans lequel l'organe de limitation (120) est en une seule pièce et est monté par des cannelures sur une surface externe d'un anneau d'ajustement (54) qui est raccordé pendant le fonctionnement à un joint d'étanchéité (52) qui est en butée contre l'obturateur sphérique (20).

19. Robinet mélangeur (10) selon la revendication 16, dans lequel :
l'organe de limitation (130) est claveté sur une surface extérieure du boîtier (14) du robinet pour empêcher la rotation de celui-ci et comprenant en outre :
un organe annulaire (140) fixé à la surface extérieure du boîtier (14) du robinet afin qu'il retienne l'organe de limitation (130) en position sur le boîtier (14) du robinet.
